# FASCICULE DE BREVET EUROPEEN

(11) **EP 1 352 798 B1**
(45) Date de publication et mention de la délivrance du brevet: **08.12.2004**
(21) Numéro de dépôt: 03290807.1
(22) Date de dépôt: 31.03.2003
(51) Int. Cl.: B60T 7/10, B60T 7/12, B60T 13/74

(54) **Procédé de gestion du stationnement d'un véhicule automobile, et véhicule équipé pour sa mise en oeuvre**
Verfahren zur Steuerung des Parkvorganges eines Kraftfahrzeuges und zu seiner Durchführung ausgerüstetes Fahrzeug
Process for controlling the parking of a vehicle and a vehicle equipped for its implementation

(30) Priorité: 03.04.2002 FR 0204156
(43) Date de publication de la demande: 15.10.2003
(73) Titulaire: Peugeot Citroen Automobiles SA, 92200 Neuilly sur Seine (FR)
(72) Inventeur: Bailleux, François, 91400 Val d'Albian (FR)
(74) Mandataire: Thinat, Michel

(56) Documents cités:
- WO-A-99/38738
- DE-A- 10 010 735
- US-A- 6 019 436
- US-A- 6 086 515
- US-A1- 2002 023 818

## Description

La présente invention concerne, de façon générale, la gestion de l'état et du fonctionnement d'un véhicule automobile.

Plus précisément, l'invention concerne, selon un premier de ses aspects, un procédé de gestion du stationnement d'un véhicule automobile doté d'un système de freinage dynamique et d'un système de freinage statique.

L'essor considérable des techniques de traitement de signaux a conduit, ces dernières années, à une automatisation croissante des véhicules automobiles dans le but d'augmenter la sécurité et le confort de ces derniers.

Cette tendance est néanmoins limitée par des raisons de poids, de coût et/ou de difficultés d'implantation, de sorte qu'il existe un risque que des véhicules de types différents offrent des prestations différentes dans leur nature, même pour ce qui concerne des fonctions de base liées à la sécurité.

Ainsi notamment, alors qu'un véhicule à boîte de vitesses automatique peut être placé dans un état d'immobilisation très stable par une simple sélection du mode "stationnement" au moyen du levier sélecteur, aucune fonction équivalente n'est traditionnellement offerte dans les véhicules automobiles à boîte de vitesses mécanique, même dans le cas où ces derniers sont équipés d'un embrayage piloté.

La présente invention a pour précisément but de remédier à cette situation.

Un procédé similaire représenté par le préambule de la revendication 1 est connu dans la publication WO 99/38738.

A cette fin, le procédé de l'invention, est defini selon la partie caractérisante de la revendication 1.

En cas d'apparition d'un événement déclencheur constitué par un ordre d'immobilisation du véhicules, la première condition peut être réalisée par l'apparition de l'ordre d'immobilisation, la seconde condition pouvant quant à elle être réalisée par la détection de l'immobilisation du véhicule, résultant de la première opération de freinage.

En cas d'apparition d'un événement déclencheur constitué par un état d'immobilisation du véhicule, le procédé de l'invention peut aussi comprendre une opération de mesure du temps dans laquelle est mesuré le temps écoulé à compter de l'instant d'apparition de l'état d'immobilisation du véhicule, les première et seconde conditions étant alors par exemple respectivement réalisées par l'écoulement de premier et second intervalles de temps à compter de l'instant d'apparition de l'état d'immobilisation du véhicule.

Il est par ailleurs possible de prévoir, en cas d'apparition d'un événement déclencheur constitué par un état d'immobilisation du véhicule, que le procédé de l'invention comprenne un second test récurrent permettant de détecter un indice d'éloignement imminent du conducteur, que la première condition soit réalisée par la détection de cet indice, et que la seconde condition soit réalisée au plus tard à la fin de l'actionnement complet du système de freinage dynamique du véhicule.

Le procédé de l'invention peut encore avantageusement comprendre une opération d'inversion, conditionnellement déclenchée par une demande d'accélération du véhicule lorsque ce dernier est immobilisé par son système de freinage statique, et consistant à actionner le système de freinage dynamique en désactivant le système de freinage statique, et une opération de libération du véhicule consistant à désactiver progressivement le système de freinage dynamique pour permettre au véhicule de repartir.

Pour pouvoir exploiter les systèmes de freinage dynamique et statique dans des conditions optimales, il peut être utile de prévoir que l'une au moins des première et seconde opérations de freinage soit mise en oeuvre en appliquant une force de freinage dont l'intensité dépend au moins de l'inclinaison du véhicule ou de la nature de l'événement déclencheur.

L'invention concerne également un véhicule automobile équipé pour la mise en oeuvre du procédé tel que précédemment défini, ce véhicule comprenant un poste de conduite équipé d'au moins un siège et d'un support de siège, un système de freinage dynamique et un système de freinage statique, et étant caractérisé en ce que le système de freinage statique comprend un moto-réducteur électrique entraînant un câble d'actionnement d'un frein de parking.

Dans un mode de réalisation préféré de l'invention, le moto-réducteur est lié au siège ou au support de siège.

Le système de freinage dynamique peut lui-même comprendre une pompe électro-hydraulique, au moins deux récepteurs de freins hydrauliques, et des moyens de commande actionnant sélectivement la pompe pour alimenter en liquide de frein sous pression les récepteurs de frein hydrauliques.

Pour permettre une modulation de l'intensité de la force de freinage en fonction de l'inclinaison du véhicule, ce dernier peut avantageusement comprendre un inclinomètre incluant un tube métallique cintré porté à un premier potentiel électrique, deux électrodes disposées à des extrémités respectives du tube, isolées de ce dernier, et portées à un second potentiel électrique, et une bille métallique roulant librement dans le tube et venant sélectivement en contact avec l'une ou l'autre des électrodes en fonction de l'inclinaison du véhicule, la nature métallique du tube et de la bille, telle qu'elle est ici invoquée, devant en fait être comprise comme fonctionnellement équivalente au caractère électriquement conducteur de ces composants.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue schématique représentant un véhicule arrêté sur une voie en pente et illustrant schématiquement, sans respect de l'échelle, un inclinomètre économique équipant ce véhicule ;
- la Figure 2 est un schéma illustrant notamment des composants du véhicule auquel fait appel le procédé de l'invention ;
- la Figure 3 est un organigramme rassemblant diverses opérations que peut comprendre le procédé de l'invention ;
- la Figure 4 est une vue schématique d'un véhicule automobile, vu du dessus ; et
- les Figures 5A à 5C forment un ensemble de trois diagrammes temporels synchronisés illustrant l'évolution de l'état de divers signaux ou organes au cours du temps t pour un véhicule mettant en oeuvre le procédé de l'invention.

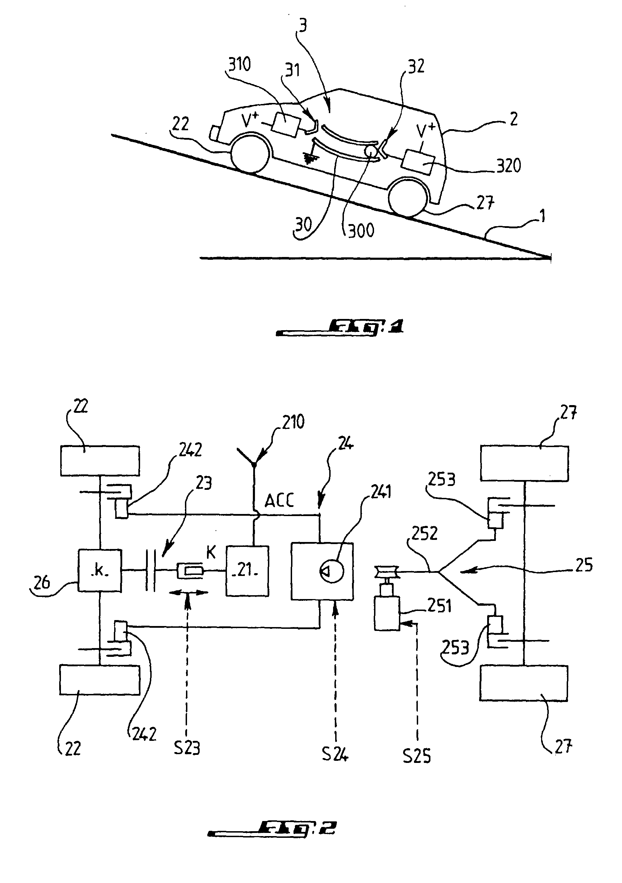

Comme annoncé précédemment, l'invention concerne un procédé permettant de gérer le stationnement, sur une voie 1 éventuellement en pente (figure 1), d'un véhicule automobile 2.

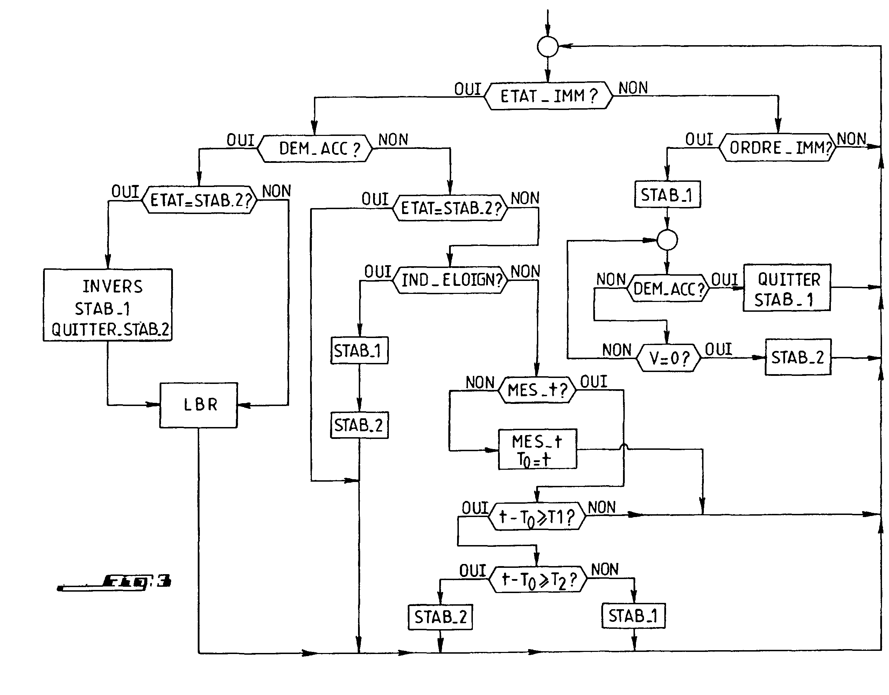

Ce véhicule 2 est, par définition, supposé équipé d'un moteur 21 (figure 2) commandé par la position, notée ACC, d'une pédale d'accélérateur 210.

Ce moteur 21 développe un couple moteur K dont l'intégralité ou dont une fraction k peut être transmise aux roues motrices 22 par l'intermédiaire d'un embrayage 23 et d'un système de transmission 26, l'embrayage 23 pouvant lui-même être constitué par un embrayage piloté de façon automatique par un signal S23.

Le procédé de l'invention s'applique à un véhicule équipé d'un système de freinage dynamique 24 et d'un système de freinage statique 25, chacun de ces systèmes étant susceptible d'être commandé par une source d'énergie indépendante de l'énergie musculaire du conducteur.

De préférence, le système de freinage dynamique 24 comprend une pompe électro-hydraulique 241 commandée par un signal S24 et susceptible d'alimenter en liquide de frein sous pression des récepteurs 242 de frein hydraulique, ces derniers n'étant illustrés sur la figure 2, par souci de simplicité de représentation, que pour les roues motrices avant 22.

De même, les électrovannes reliant la pompe 241 aux récepteurs 242 de frein hydraulique, et formant un modulateur hydraulique bien connu de l'homme de métier, ont été volontairement omises des figures pour les mêmes raisons.

Par ailleurs, le système de freinage statique 25 comprend avantageusement un moto-réducteur électrique 251 commandé par un signal S25 et susceptible d'entraîner un câble 252 propre à actionner un frein de parking 253 agissant au moins sur les roues arrière 27 du véhicule 2.

Le procédé de l'invention permet de placer le véhicule dans un état de stationnement stable sans intervention du conducteur, ou avec une intervention minime de sa part.

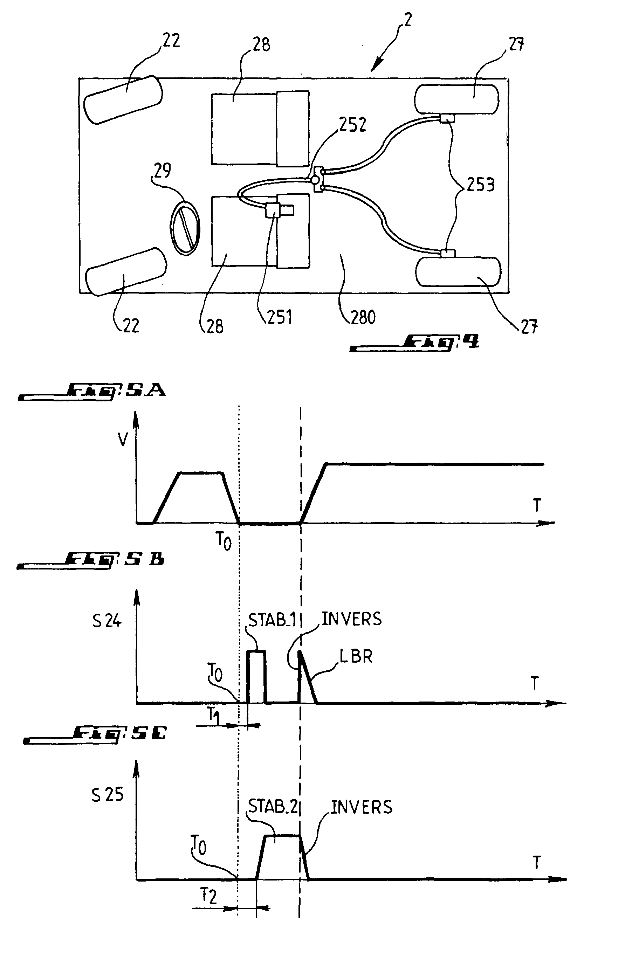

Pour ce faire (figure 3), ce procédé comprend un ou plusieurs tests récurrents, tels que ceux qui sont référencés "ETAT_IMM ?" et "ORDRE_IMM ?", dont chacun permet de détecter un événement déclencheur, tel qu'un ordre d'immobilisation émis par le conducteur du véhicule 2, ou un état d'immobilisation de ce véhicule.

Dès la réalisation d'une première condition prédéterminée, une première opération de freinage, notée STAB_1, est mise en oeuvre et opère un freinage du véhicule 2 par actionnement de son système de freinage dynamique 24.

Et dès la réalisation d'une seconde condition prédéterminée, une seconde opération de freinage, notée STAB_2, est mise en oeuvre et opère un freinage du véhicule 2 par actionnement de son système de freinage statique 25.

Plusieurs exemples de ce principe général sont illustrés sur l'organigramme de la figure 3.

Si par exemple (figure 3, branche droite) le véhicule 2 est en phase de roulement, de sorte que le test "ETAT_IMM ?" qui permet de repérer un état d'immobilisation du véhicule 2 conduit à une conclusion négative, et si le conducteur émet un ordre d'immobilisation du véhicule, de sorte que le test "ORDRE_IMM ?" qui permet de repérer un ordre d'immobilisation du véhicule 2 conduit à une conclusion positive, la première opération de freinage STAB_1 est effectuée dès la détection de cet ordre d'immobilisation.

A moins que le conducteur du véhicule m'émette une demande d'accélération DEM_ACC en enfonçant la pédale 210, auquel cas la première opération de freinage STAB_1 est interrompue, le procédé de l'invention surveille la vitesse V du véhicule, en la comparant à zéro.

Dès que le procédé détecte que la vitesse V du véhicule 2 est nulle, c'est-à-dire que la première opération de freinage STAB_1 a permis d'immobiliser ce véhicule, la seconde condition est réalisée et la seconde opération de freinage STAB_2 est effectuée.

Si au contraire (figure 3, branche gauche et développement au centre gauche) le véhicule 2 est à l'arrêt, de sorte que le test "ETAT_IMM ?" qui permet de repérer un état d'immobilisation du véhicule 2 conduit à une conclusion positive, si le conducteur n' émet aucune demande d'accélération DEM_ACC du véhicule, et si enfin le véhicule n'est pas déjà dans un état d'immobilisation qui résulterait de la seconde opération de freinage STAB_2, alors le procédé de l'invention met en oeuvre un second test récurrent, noté "IND_ELOIGN ?", qui permet de détecter un indice d'éloignement imminent du conducteur.

Peuvent par exemple être considérés comme des indices du souhait du conducteur de quitter le véhicule sans délai le fait qu'il place le sélecteur de vitesses en position neutre, le fait qu'il arrête le moteur, le fait qu'il ouvre sa portière, ou encore le fait qu'il détache sa ceinture de sécurité.

Dès qu'un tel indice a été détecté, la première opération de freinage STAB_1 est effectuée, la seconde opération de freinage STAB_2 étant effectuée au plus tard à la fin de l'actionnement complet du système de freinage dynamique 24 du véhicule 2, c'est-à-dire au plus tard à la fin de l'opération de freinage STAB_1.

Si (figure 3, branche gauche et développement au centre droit) le véhicule 2 est à l'arrêt, de sorte que le test "ETAT_IMM ?" qui permet de repérer un état d'immobilisation du véhicule 2 conduit à une conclusion positive, si le conducteur n'émet aucune demande d'accélération DEM_ACC du véhicule, si le véhicule n'est pas déjà dans un état d'immobilisation qui résulterait de la seconde opération de freinage STAB_2, et si enfin le second test récurrent "IND_ELOIGN ?" est négatif, le procédé de l'invention met en oeuvre une opération de mesure du temps MES_t.

A moins que le procédé n'ait déjà enclenché cette opération MES_t, c'est-à-dire à moins que le procédé ne se trouve pas au début de l'opération MES_t, l'instant courant t est pris comme instant To d'apparition de l'état d'immobilisation du véhicule.

Une fois que cette opération a été enclenchée, le procédé compare périodiquement à deux intervalles de temps T1 et T2 le temps t-To écoulé depuis le début To de l'opération MES_t, l'intervalle de temps T2 étant supérieur à l'intervalle de temps T1.

La première opération de freinage STAB_1 est alors effectuée à la fin de l'intervalle de temps T1, la seconde opération de freinage STAB_2 étant effectuée à la fin de l'intervalle de temps T2.

Ce dernier ensemble d'opérations est illustré sur les figures 5A à 5C, la figure 5A représentant l'évolution de la vitesse V du véhicule, la figure 5B représentant l'évolution du signal S24 qui commande le système de freinage dynamique 24, et la figure 5C représentant l'évolution du signal S25 qui commande le système de freinage statique 25.

Comme le montre la figure 5B, le procédé peut commander au véhicule 2 de quitter l'état STAB_1 dès que l'état STAB_2 est atteint.

Si (figure 3, branche gauche extrême) le conducteur du véhicule 2 enfonce la pédale d'accélérateur 210, émettant ainsi une demande d'accélération DEM_ACC, alors que le véhicule 2 est immobilisé par son système de freinage statique 25, c'est-à-dire dans l'état STAB_2, le procédé de l'invention met en oeuvre une opération d'inversion INVERS.

Cette opération d'inversion INVERS, qui consiste à actionner le système de freinage dynamique 24 en désactivant le système de freinage statique 25, se manifeste par l'évolution des signaux S24 et S25 qu'illustrent les figures 5B et 5C.

L'opération d'inversion INVERS prépare à une opération de libération LBR du véhicule (figure 5B), qui consiste elle-même à désactiver progressivement le système de freinage dynamique 24 pour permettre au véhicule 2 de repartir, par exemple en pilotant l'embrayage 23 par le signal S23 de manière à faire progressivement passer tout le couple moteur K vers les roues motrices 22.

La figure 4 illustre schématiquement un véhicule automobile équipé pour la mise en oeuvre du procédé tel que précédemment décrit, ce véhicule comprenant typiquement et de façon connue un poste de conduite équipé d'un ou plusieurs sièges 28, un support de siège 280, un système de freinage dynamique 24 et un système de freinage statique 25.

Selon l'invention, le moto-réducteur électrique 251 qui équipe le système de freinage statique 25 et qui entraîne le câble d'actionnement 252 du frein de parking 253 est de préférence monté sur le siège 28 du conducteur, sur le siège du passager avant, ou encore sur le support de siège 280.

Grâce à cet agencement, le conducteur du véhicule peut très facilement commander au moins le système de freinage statique 25 ou émettre un ordre d'immobilisation ORDRE_IMM alors que le véhicule est toujours en train de rouler.

De plus, en cas de perte de tension d'alimentation, par exemple en cas de panne de batterie, le système de freinage statique 25 peut aisément être actionné à la main, au moyen d'une clef ou d'un tournevis, dans la mesure où il est immédiatement accessible.

Pour pouvoir exploiter chacun des systèmes de freinage dynamique 24 et statique 25 dans des conditions optimales, il peut être opportun de moduler la force de freinage appliquée par chacun de ces systèmes en fonction de la pente sur laquelle le véhicule doit être immobilisé.

En effet, s'il est bien sûr possible d'envisager l'application systématique d'une force de freinage maximale permettant d'immobiliser le véhicule sur la pente la plus forte qu'il puisse rencontrer, cette stratégie présente l'inconvénient de conduire à une fatigue prématurée du système de freinage et à l'éventuelle apparition d'un couple de freinage parasite résiduel, ou à la nécessité de prendre, dans la conception de ce système de freinage, des mesures particulières qui en augmentent considérablement le coût et le poids.

Pour éviter cet inconvénient, il est par exemple possible de prévoir une modulation de la force de freinage sur trois niveaux d'intensité, la force de freinage appliquée étant relativement faible lorsque le véhicule est à plat ou sur une pente de 4 % au plus, intermédiaire lorsque le véhicule se trouve sur une pente de par exemple 8 % au plus, et maximale lorsque le véhicule se trouve sur une pente plus forte encore.

Le niveau d'intensité de la force de freinage peut être choisi en fonction d'un signal élaboré par un capteur équipant le véhicule et / ou en fonction de la nature de l'événement déclencheur.

Si le véhicule est doté d'un accéléromètre à trois axes, il est ainsi possible de choisir le niveau d'intensité de la force de freinage en fonction au moins de l'amplitude de la composante d'accélération longitudinale de fréquence nulle de ce véhicule.

Il est aussi possible de prévoir de n'appliquer la force de freinage d'intensité maximale que si l'immobilisation du véhicule est requise par une commande manuelle, par exemple.

En toute hypothèse, il est également possible de prévoir de tenir compte du sens de la pente sur laquelle se trouve le véhicule pour optimiser la force de freinage sur les freins avant et sur les freins arrière du véhicule.

Un inclinomètre économique adapté à la mise en oeuvre de cette mesure est représenté schématiquement sur la figure 1.

Cet inclinomètre 3 comprend un tube métallique cintré 30 par exemple relié à la masse du véhicule et dans lequel roule librement une bille métallique 300.

Deux électrodes 31 et 32, électriquement isolées du tube 30, sont disposées aux extrémités respectives de ce dernier et reliées à une source d'énergie électrique V+ à travers des récepteurs électriques respectifs 310 et 320.

Tant que la pente sur laquelle se trouve le véhicule est inférieure à une limite dépendant notamment de la courbure du tube 30 et par exemple fixée à 4 %, la bille 300 ne touche aucune des électrodes 31 et 32, de sorte qu'aucun des récepteurs électriques 310 et 320 n'est parcouru par un courant électrique.

Si, comme le montre la figure 1, le véhicule se trouve en revanche sur une pente arrière plus forte que par exemple 4 %, la bille 300 vient en contact avec l'électrode arrière 32, cette situation étant détectée par la circulation d'un courant électrique dans le récepteur électrique 320.

Si, de même, le véhicule se trouve sur une pente avant plus forte que par exemple 4 %, la bille 300 vient en contact avec l'électrode avant 31, cette situation étant détectée par la circulation d'un courant électrique dans le récepteur électrique 310.

Il est également possible de faire en sorte que l'angle formé entre l'axe longitudinal du véhicule et la tangente à la paroi du tube 30 au point où la bille 300 rencontre l'électrode 31 soit différent de l'angle formé entre l'axe longitudinal du véhicule et la tangente à la paroi du tube 30 au point où la bille 300 rencontre l'électrode 32, de manière à pouvoir compenser toute éventuelle différence constructive ou fonctionnelle entre les freins avant et les freins arrière, dont la participation au maintien du véhicule diffère suivant le sens de la pente.

## Revendications

1. Procédé de gestion du stationnement d'un véhicule automobile (2) doté d'un système de freinage dynamique (24) et d'un système de freinage statique (25) ,qui comprend au moins un premier test récurrent (ETAT_IMM ?, ORDRE_IMM ?) permettant de détecter un événement déclencheur, tel qu'un ordre d'immobilisation ou un état d'immobilisation de ce véhicule, une première opération de freinage (STAB_1) mise en oeuvre en freinant le véhicule (2) par actionnement du système de freinage dynamique (24) au plus tard en réponse à la réalisation d'une première condition, et une seconde opération de freinage (STAB_2) mise en oeuvre en freinant le véhicule (2) par actionnement de son système de freinage statique (25) au plus tard en réponse à la réalisation d'une seconde condition, **caractérisé en ce que** l'une au moins des première et seconde opérations de freinage (STAB_1, STAB_2) est mise en oeuvre en appliquant une force de freinage dont l'intensité dépend au moins de l'inclinaison du véhicule ou de la nature de l'événement déclencheur.

2. Procédé suivant la revendication 1, **caractérisé en ce qu'**en cas d'apparition d'un événement déclencheur constitué par un ordre d'immobilisation (ORDRE_IMM) du véhicule (1), la première condition est réalisée par l'apparition de l'ordre d'immobilisation (ORDRE_IMM), et **en ce que** la seconde condition est réalisée par la détection (V=0 ?) de l'immobilisation du véhicule (2), résultant de la première opération de freinage (STAB_1).

3. Procédé suivant la revendication 1 ou 2, **caractérisé en ce qu'**en cas d'apparition d'un événement déclencheur constitué par un état d'immobilisation (ETAT_IMM) du véhicule (2), ce procédé comprend une opération de mesure du temps (MES_t) dans laquelle est mesuré le temps (t) écoulé à compter de l'instant d'apparition (To) de l'état d'immobilisation du véhicule, et **en ce que** les première et seconde conditions sont respectivement réalisées par l'écoulement de premier et second intervalles de temps (T1, T2) à compter de l'instant d'apparition (To) de l'état d'immobilisation du véhicule (2).

4. Procédé suivant l'une quelconque des revendications précédentes, **caractérisé en ce qu'**en cas d'apparition d'un événement déclencheur constitué par un état d'immobilisation (ETAT_IMM) du véhicule (2), ce procédé comprend un second test récurrent (IND_ELOIGN ?) permettant de détecter un indice d'éloignement imminent du conducteur, **en ce que** la première condition est réalisée par la détection de cet indice, et **en ce que** la seconde condition est réalisée au plus tard à la fin de l'actionnement complet du système de freinage dynamique (24) du véhicule (2).

5. Procédé suivant l'une quelconque des revendications précédentes, **caractérisé en ce qu'**il comprend une opération d'inversion (INVERS), conditionnellement déclenchée par une demande d'accélération (DEM_ACC) du véhicule (2) lorsque ce dernier est immobilisé par son système de freinage statique (25), et consistant à actionner le système de freinage dynamique (24) en désactivant le système de freinage statique (25), et une opération de libération (LBR) du véhicule consistant à désactiver progressivement le système de freinage dynamique (24) pour permettre au véhicule (2) de repartir.

6. Véhicule automobile équipé pour la mise en oeuvre du procédé suivant l'une quelconque des revendications précédentes, ce véhicule comprenant un poste de conduite équipé d'au moins un siège (28) et d'un support de siège (280), un système de freinage dynamique (24) et un système de freinage statique (25), qui comprend un moto-réducteur électrique (251) entraînant un câble d'actionnement (252) d'un frein de parking (253), et **caractérisé en ce que** le moto-réducteur (251) est lié au siège (28) ou au support de siège (280).

7. Véhicule suivant la revendication 6, **caractérisé en ce que** le système de freinage dynamique (24) comprend une pompe électro-hydraulique (241), au moins deux récepteurs (242) de freins hydraulique, et des moyens de commande (S24) actionnant sélectivement la pompe (241) pour alimenter en liquide de frein sous pression les récepteurs de frein hydrauliques (242).

8. Véhicule selon la revendication 6 ou 7, **caractérisé en ce qu'**il comprend un inclinomètre (3) permettant de moduler la force de freinage appliquée par chacun des systèmes de freinage dynamique (24) et statique (25) en fonction de la pente sur laquelle le véhicule doit être immobilisé, l'inclinomètre comprenant un tube métallique cintré (30) porté à un premier potentiel électrique, deux électrodes (31,32) disposées à des extrémités respectives du tube, isolées de ce dernier, et portées à un second potentiel électrique et une bille métallique (300) roulant librement dans le tube (30) et venant sélectivement en contact avec l'une ou l'autre des électrodes (31, 32) en fonction de l'inclinaison du véhicule.

## Patentansprüche

1. Verfahren zur Steuerung des Parkvorgangs eines Kraftfahrzeugs (2), das mit einem dynamischen Bremssystem (24) und mit einem statischen Bremssystem (25) ausgestattet ist, das zumindest einen Rücklauftest (ETAT_IMM ?, ORDRE_IMM) umfasst, mit dem ein Auslöseereignis erfasst werden kann, wie etwa ein Abstellbefehl oder ein Abstellzustand dieses Fahrzeugs, sowie einen ersten Bremsvorgang (STAB_1 ), der durch Abbremsen des Fahrzeugs (2) durch Betätigung des dynamischen Bremssystems (24) spätestens in Antwort auf die Realisierung einer ersten Bedingung erfolgt, und einen zweiten Bremsvorgang (STAB_2), der durch Abbremsen des Fahrzeugs (2) durch Betätigung seines statischen Bremssystems (25) spätestens in Antwort auf die Realisierung einer zweiten Bedingung erfolgt, **dadurch gekennzeichnet, dass** zumindest einer der Bremsvorgänge des ersten und zweiten Bremsvorgangs (STAB_1, STAB_2) mit Einleiten einer Bremskraft erfolgt, deren Intensität zumindest von der Neigung des Fahrzeugs oder von der Art des Auslöseereignisses abhängt.

2. Verfahren nach Anspruch 1, **dadurch gekennzeichnet, dass** bei Auftreten eines Auslöseereignisses, das aus einem Abstellbefehl (ORDRE_IMM) des Fahrzeugs (1) besteht, die erste Bedingung durch Erscheinen des Abstellbefehls (ORDRE_IMM) realisiert wird, und dass die zweite Bedingung durch Erfassen (V=0 ?) des Stillstands des Fahrzeugs (2) realisiert wird, der sich aus dem ersten Bremsvorgang (STAB_1) ergibt.

3. Verfahren nach Anspruch 1 oder 2, **dadurch gekennzeichnet, dass** bei Auftreten eines Auslöseereignisses, das aus einem Abstellzustand (ETAT_IMM) des Fahrzeugs (2) besteht, dieses Verfahren einen Zeitmessvorgang (MES_t) umfasst, bei dem die Zeit (t) gemessen wird, die seit dem Zeitpunkt des Auftretens (To) des Abstellzustands des Fahrzeugs abgelaufen ist, und dass die erste und die zweite Bedingung jeweils durch Ablaufen eines ersten bzw. zweiten Zeitraums (T1, T2) seit dem Zeitpunkt (To) des Auftretens des Abstellzustands des Fahrzeugs (2) realisiert wird.

4. Verfahren nach einem der vorangehenden Ansprüche, **dadurch gekennzeichnet, dass** bei Auftreten eines Auslöseereignisses, das aus einem Abstellzustand (ETAT_IMM) des Fahrzeugs (2) besteht, dieses Verfahren einen zweiten Rücklauftest (IND_ELOIGN ?) umfasst, mit dem ein Anzeichen für ein bevorstehendes Entfemen des Fahrers erfasst werden kann, dass die erste Bedingung durch die Erfassung dieses Anzeichens realisiert wird und dass die zweite Bedingung später am Ende der vollständigen Betätigung des dynamischen Bremssystems (24) des Fahrzeugs (2) realisiert wird.

5. Verfahren nach einem der vorangehenden Ansprüche, **dadurch gekennzeichnet, dass** es einen Umkehrvorgang (INVERS) umfasst, der bedingt ausgelöst wird durch eine Beschleunigungsanforderung (DEM_ACC) des Fahrzeugs (2), wenn letzteres über sein statisches Bremssystem (25) stillsteht, und der darin besteht, das dynamische Bremssystem (24) zu betätigen, indem das statische Bremssystem (25) deaktiviert wird, und ein Freigabevorgang (LBR) des Fahrzeugs darin besteht, das dynamische Bremssystem (24) allmählich zu deaktivieren, um es dem Fahrzeug (2) zu gestatten, wieder anzufahren.

6. Kraftfahrzeug, ausgestattet zum Durchführen des Verfahrens nach einem der vorangehenden Ansprüche, wobei dieses Fahrzeug einen Führerstand enthält, der mit mindestens einem Sitz (28) und einem Sitzträger (280) ausgestattet ist, sowie ein dynamisches Bremssystem (24) und ein statisches Bremssystem (25), das einen elektrischen Getriebemotor (251) enthält, der ein Betätigungsseil (252) einer Feststellbremse (253) antreibt, und **dadurch gekennzeichnet ist, dass** der Getriebemotor (251) mit dem Sitz (28) oder dem Sitzträger (280) verbunden ist.

7. Fahrzeug nach Anspruch 6, **dadurch gekennzeichnet, dass** das dynamische Bremssystem (24) eine Elektro-Hydropumpe (241), zumindest zwei Hydraulikbremsaufnehmer (242) und Steuermittel (S24) enthält, welche selektiv die Pumpe (241) betätigen, um die Hydraulikbremsaufnehmer (242) mit unter Druck stehender Bremsflüssigkeit zu versorgen.

8. Fahrzeug nach Anspruch 6 oder 7, **dadurch gekennzeichnet, dass** es einen Neigungsmesser (3) enthält, mit dem die vom dynamischen Bremssystem (24) bzw. vom statischen Bremssystem (25) aufgebrachte Bremskraft in Abhängigkeit von der Neigung moduliert werden kann, auf der das Fahrzeug abgestellt werden soll, wobei der Neigungsmesser ein gebogenes Metallrohr (30) enthält, das auf ein erstes elektrisches Potential gebracht wird, sowie zwei Elektroden (31, 32), die an den jeweiligen Enden des Rohrs angeordnet sind, von letzterem isoliert sind und auf ein zweites elektrisches Potential gebracht werden, und eine Metallkugel (300), die im Rohr (30) frei drehbar ist und selektiv mit der einen oder der anderen der Elektroden (31, 32) je nach Neigung des Fahrzeugs in Kontakt gelangt.

## Claims

1. Method of controlling the parking of a motor vehicle (2) equipped with a dynamic braking system (24) and a static braking system (25), which includes at least an initial recurrent test (STATE_IMM ?, INSTRUCTION_IMM ?) enabling the detection of an activating event, such as an instruction for immobilization or a state of immobilization of said vehicle, a first braking operation (STAB_1) implemented by braking the vehicle (2) by activation of the dynamic braking system (24) at the latest in response to fulfilment of a first condition, and a second braking operation (STAB_2) implemented by braking the vehicle (2) by activation of its static braking system (25) at the latest in response to fulfilment of a second condition, **characterized in that** at least one of the first and second braking operations (STAB_1, STAB_2) is implemented by applying a braking force, the strength of which depends at least on the inclination of the vehicle or the nature of the activating event.

2. Method according to Claim 1, **characterized in that**, with the occurrence of an activating event consisting of an instruction for immobilization (INSTRUCTION_IMM) of the vehicle (2), the first condition is fulfilled by the occurrence of the instruction for immobilization (INSTRUCTION_IMM), and **in that** the second condition is fulfilled by the detection (V=0 ?) of the immobilization of the vehicle (2), resulting from the first braking operation (STAB_1).

3. Method according to Claim 1 or 2, **characterized in that**, with the occurrence of an activating event consisting of a state of immobilization (STATE_IMM) of the vehicle (2), this method includes a time-measuring operation (MEAS_t) in which the time (t) which has elapsed as from the time of occurrence (To) of the state of immobilization of the vehicle is measured, and **in that** the first and second conditions are respectively fulfilled by the elapsing of the first and second time intervals (T1, T2) as from the time of occurrence (To) of the state of immobilization of the vehicle (2).

4. Method according to any one of the preceding claims, **characterized in that**, with the occurrence of an activating event consisting of a state of immobilization (STATE_IMM) of the vehicle (2), this method includes a second recurrent test (ABSENCE_IND. ?) enabling the detection of an indication of the imminent absence of the driver, **in that** the first condition is fulfilled by the detection of this indication, and **in that** the second condition is fulfilled at the latest at the end of complete activation of the dynamic braking system (24) of the vehicle (2).

5. Method according to any one of the preceding claims, **characterized in that** it includes a reverse operation (REVERSE), conditionally activated by a demand for acceleration (DEM_ACC) of the vehicle (2) when the latter is immobilized by its static braking system (25), and consisting of activating the dynamic braking system (24) by deactivating the static braking system (25), and an operation for releasing (REL) the vehicle consisting of progressively deactivating the dynamic braking system (24) to enable the vehicle (2) to start up again.

6. Motor vehicle equipped for implementing the method according to any one of the preceding claims, the part of the vehicle occupied by the driver being provided with at least one seat (28) and a seat support (280), a dynamic braking system (24) and a static braking system (25) including an electric motor reducer (251) carrying along a cable (252) for operating a parking brake (253), and **characterized in that** the motor reducer (251) is connected to the seat (28) or to the seat support (280).

7. Vehicle according to Claim 6, **characterized in that** the dynamic braking system (24) comprises an electro-hydraulic pump (241), at least two hydraulic brake receptors (242), and control means (S24) selectively operating the pump (241) for feeding brake fluid under pressure to the hydraulic brake receptors (242).

8. Vehicle according to Claim 6 or 7, **characterized in that** it includes an inclinometer (3) enabling modulation of the braking force applied by each of the dynamic (24) and static (25) braking systems as a function of the slope on which the vehicle has to be immobilized, the inclinometer comprising a curved metal tube (30) brought to a first electric potential, two electrodes (31, 32) disposed at the respective ends of the tube, insulated from the latter, and brought to a second electric potential, and a metal ball (300) rolling freely in the tube (30) and selectively coming into contact with one or other of the electrodes (31, 32) as a function of the inclination of the vehicle.
